# EUROPEAN PATENT SPECIFICATION

(11) **EP 3 903 145 B1**
(45) Date of publication and mention of the grant of the patent: **26.02.2025**
(21) Application number: 19848817.3
(22) Date of filing: 20.12.2019
(51) Int. Cl.: G02C 5/22

(54) **SPRING HINGE FOR SPECTACLES, FRAME COMPRISING SUCH A HINGE AND METHOD FOR ASSEMBLING SUCH A HINGE**
FEDERSCHARNIER FÜR BRILLEN, RAHMEN MIT SOLCH EINEM SCHARNIER UND VERFAHREN ZUR MONTAGE SOLCH EINES SCHARNIERS
CHARNIÈRE À RESSORT POUR LUNETTES, CADRE COMPRENANT UNE TELLE CHARNIÈRE ET PROCÉDÉ D'ASSEMBLAGE D'UNE TELLE CHARNIÈRE

(30) Priority: 28.12.2018 IT 201800021391 U
(43) Date of publication of application: 03.11.2021
(73) Proprietor: Ideal S.R.L., 32038 Setteville (BL) (IT)
(72) Inventor: MONDIN, Fulvio, 32031 Alano di Piave (Belluno) (IT)
(74) Representative: Gallo, Luca
(86) International application number: PCT/IB2019/061187
(87) International publication number: WO 2020/136528

(56) References cited:
- WO-A1-2014/195839
- IT-A1- 201700 020 820
- US-A- 5 517 258
- US-A- 5 889 575

## Description

The present invention relates to a spring hinge for spectacles, suitable for hinging together the front piece and the side arms of a spectacles frame. Moreover, the present invention relates to a spectacles frame comprising such a spring hinge. Finally, the present invention relates to a method for assembling such a spring hinge.

It is known that spring hinges, also called "elastic hinges" or "flex hinges", allow extra opening of the side arms without damage to the frame. These usually comprise two elements which are pivotably mounted together and associated respectively with the front piece and one of the two side arms of the frame.

The flex hinge generally comprises an element or swivel piece which is slidable against the action of a spring and is located inside a seat associated with one end of the side arm or one end of the front piece.

Recently, for mainly aesthetic reasons, a type of flex hinge defined as "hidden" or "concealable" has been developed where the seat for the swivel piece is formed directly inside the body of the side arm or the front piece. In this case, the seat consists, in fact, of a cavity provided inside the side arm or the front piece which are preferably made of polymer material.

In order to prevent the swivel piece from rotating with respect to the cavity in which it is slidably fixed, the cavity and the swivel piece have respective cross-sections designed to provide a form-fitting connection with each other.

Such a type of hinge is described for example in Italian patent IT 1390205.

This patent describes a swivel piece provided with a longitudinal through-hole inside which, via an opening formed in the hinging portion of the said swivel piece, a fixing screw is inserted.

A helical spring is fitted onto the fixing screw so as to be locked between the head of the screw and a bearing portion formed in the end part of the swivel piece.

The end portion of the fixing screw is threaded and designed to project from a hole formed in the terminal end of the swivel piece, in a position opposite to the front opening, so as to be fixed inside the side arm. Once the screw has been fixed in the side arm, the swivel piece is able to slide inside the cavity formed in the side arm against the action of the spring.

This solution is not without defects.

Firstly, the hinge may not be supplied in a preassembled condition. The fixing screw, in fact, before being fixed to the side arm, may not be locked in position inside the swivel piece.

The manufacturer of the spectacles is not only required to provide in the body of the side arm a longitudinal cavity with specific dimensions and shape, but is also required to assemble the various parts of the hinge at the time of mounting.

Such assembly, considering the increasingly small dimensions of the parts to be handled, requires a not insignificant amount of time, with obvious disadvantages in terms of cost and productivity.

Moreover, the need to insert the fixing screw, with the spring fitted thereon, through a front opening provided in the hinging portion of the swivel piece, means that there are dimensional constraints. In order to ensure the necessary strength of the hinging portion of the swivel piece, in fact, the transverse dimensions of the latter may not be smaller than a certain value and this means that the hinge may be used solely in combination with side arms which have larger transverse dimensions.

A spring hinge of the "hidden" flex type is also described in Italian patent application No. 102017000020820 in the name of the same Applicant.

In this solution, the fixing screw of the swivel piece is fixed to the side arm by means of a stop element provided with gripping means suitable for securing the stop element, and therefore the fixing screw, to the side arm.

The provision of the stop element allows the hinge to be provided already in the preassembled condition, with the fixing screw inserted inside the swivel piece and locked in position by means of the stop element.

The manufacturer of the spectacles, in order to lock the swivel piece in position, must no longer screw the fixing screw into the side arm. Fixing, in fact, may be performed by exerting an axial compressive force at the front end of the fixing screw so that the stop element and the associated gripping means engage inside the seat provided in the cavity of the side arm. This solution is therefore advantageous compared to IT 1390205. However, although the stop element may be fixed on the outside of the swivel piece, it is also envisaged that the fixing screw on which the spring is fitted is inserted inside the swivel piece by means of a through-hole formed in the hinging portion of the swivel piece.

This solution, therefore, in order to ensure the necessary strength of the hinging portion of the swivel piece, also does not allow the transverse dimensions thereof to be reduced by more than a certain amount.

An alternative solution, finally, is described in the United States patent US 5,889,575.

The swivel piece, which is intended to be seated inside a cavity provided in the side arm of the spectacles, has the form of a cuboid and has a lateral opening for insertion, inside it, of a fixing screw on which a helical spring is fitted.

The screw projects at the rear through a hole provided in the end wall of the swivel piece, so that it may be fixed in the side arm.

This hinge may be supplied in a preassembled condition since the swivel piece is not provided with a through-hole in its hinging portion. Once the fixing screw has been inserted in position, the head of the screw comes into contact against the front end wall of the swivel piece, therefore remaining locked inside the opening formed therein.

At the time of fixing of the swivel piece inside the cavity of the side arm, the presence of the front end wall, without through-openings, allows the fixing screw to be pushed inside the side arm, allowing fixing thereof.

Owing to the absence of a through-hole in the hinging portion, it is possible moreover to obtain hinges with hinging portions which are smaller than those of the solutions described above, with obvious aesthetic advantages.

However, this hinge is also not without defects.

Insertion of the screw inside the swivel piece is not easy to perform since the screw must be inclined in order to be inserted inside the rear through-hole. This insertion, moreover, is made difficult by the presence of the spring.

In order to facilitate insertion of the screw the usual procedure adopted is to widen the transverse dimensions of the swivel piece, thus partly losing the advantage which can be obtained by the absence of the through-hole in the front end portion.

Moreover, again in order to facilitate the insertion of the fixing screw inside the swivel piece, the usual procedure is to provide a rear hole with bigger dimensions than those which would be sufficient for inserting the shank of the fixing screw.

This larger hole may create problems during fixing of the screw in the side arm. The screw, in fact, owing to the play existing between its terminal end portion and the rear hole could become inclined following the compressive force acting on its front end portion, making fixing of the hinge less precise.

In the worst case, owing to the friction between swivel piece and cavity, the hinge could get stuck during the opening and closing movements of the side arm.

Finally, once the swivel piece is fixed inside the side arm, the absence of a through-opening in the hinging portion prevents the possibility of accessing the fixing screw. It is therefore not possible to adjust the travel of the swivel piece or to replace the hinge.

The object of the present invention is therefore to overcome the aforementioned drawbacks. In particular, a task of the present invention is to provide a spring hinge for spectacles which may be applied to the frame in a simple and low-cost manner.

Moreover, a task of the present invention is to provide a spring hinge for spectacles which has small dimensions and which may also be applied to side arms and front pieces with small cross-sections, without adversely affecting the mechanical strength.

Furthermore, a task of the present invention is to provide a spring hinge for spectacles which may be fixed in the side arm or in the front piece in a safe and simple manner and which is precise and reliable.

Moreover, a task of the present invention is to provide a spring hinge for spectacles which, after being fixed to the side arm or to the front piece of a frame, may be adjusted and if necessary replaced.

Furthermore, a task of the present invention is to provide a frame for spectacles, which may be easily assembled.

Finally a task of the present invention is to provide a method for assembling the hinge which is simple and may be easily automated.

These and other objects and tasks are achieved with a spring hinge according to claim 1, with a frame for spectacles according to claim 7 and with a method according to claim 9.

In order to explain more clearly the innovative principles of the present invention and its advantages compared to the prior art, a number of examples of embodiment applying these principles will be described below with the aid of the attached drawings. In the drawings:
- Figure 1 shows a partial side view of a frame according to the invention;
- Figure 2 shows an exploded view of the frame according to Figure 1;
- Figure 3 shows a view similar to that of Figure 1, partially cross-sectioned;
- Figure 4 shows a larger-scale view of the detail indicated by the letter A in Figure 3;
- Figure 5 shows a partially sectioned view of a part of the frame according to the invention;
- Figure 5A is a view similar to Figure 5, but relating to a different embodiment of the frame according to the invention;
- Figure 6 shows a larger-scale view of the detail indicated by the letter B in Figure 5;
- Figure 6A shows a larger-scale view of the detail indicated by the letter D in Figure 5A;
- Figure 7 shows a side view of a first embodiment of a hinge;
- Figure 8 shows a second side view of the hinge according to Figure 7;
- Figure 9 shows a perspective view of the hinge according to Figure 7;
- Figures 10, 11 and 12 show, respectively, views similar to Figures 7, 8 and 9, in which the hinge is in a different operating condition;
- Figure 13 shows an exploded view of the hinge according to Figure 7;
- Figures 14A, 14B, 14C and 14D show in schematic form the different steps of a method for assembling the hinge according to Figure 7;
- Figures 14E, 14F, 14G and 14H are similar to Figures 14A, 14B, 14C and 14D, but relate to a different method for assembling the hinge according to Figure 7;
- Figures 15 and 16 show, respectively, views similar to Figures 7 and 8, but with reference to an embodiment of the hinge according to the invention;
- Figure 16A shows a view similar to Figure 16, in which the hinge is in a different operating condition;
- Figure 17 shows a view similar to Figure 9, but with reference to an embodiment of the hinge according to the invention;
- Figure 18 shows an exploded view of the hinge according to Figure 15;
- Figures 19A, 19B, 19C and 19D illustrate in schematic form the different steps of a method for assembling the hinge according to Figure 15;
- Figures 20 and 21 show, respectively, views similar to Figures 7 and 8, but with reference to another type of hinge;
- Figure 21A shows a view similar to Figure 21, in which the hinge is in a different operating condition;
- Figure 22 shows a view similar to Figure 9, but with reference to another type of hinge;
- Figure 23 shows an exploded view of the hinge according to Figure 20;
- Figure 23A shows a side view, on a larger scale, of a part of the hinge according to Figure 20;
- Figure 23B shows a front view of the part shown in Figure 23A;
- Figures 24A, 24B, 24C and 24D show in schematic form the different steps of a method for assembling the hinge according to Figure 20;
- Figures 24E, 24F, 24G and 24H are similar to Figures 24A, 24B, 24C and 24D, but relate to a different method for assembling the hinge according to Figure 20;
- Figure 25 shows a partial view, from above, of the frame provided with the hinge according to Figure 20;
- Figure 26 shows a perspective view of the detail indicated by the letter C in Figure 25;
- Figure 27 shows a cross-sectional view of the detail indicated by the letter C in Figure 25;
- Figures 28 and 29 show, respectively, views similar to Figures 7 and 8, but with reference to a further embodiment of the hinge according to the invention;
- Figures 30A, 30B and 30C show in schematic form the different steps of a method for assembling the hinge according to Figure 28;
- Figure 31 shows a view similar to Figure 4, but relating to the hinge according to Figure 28. With reference to the attached figures, a spring hinge realized in accordance with the principles of the present invention is indicated overall by the number 10.

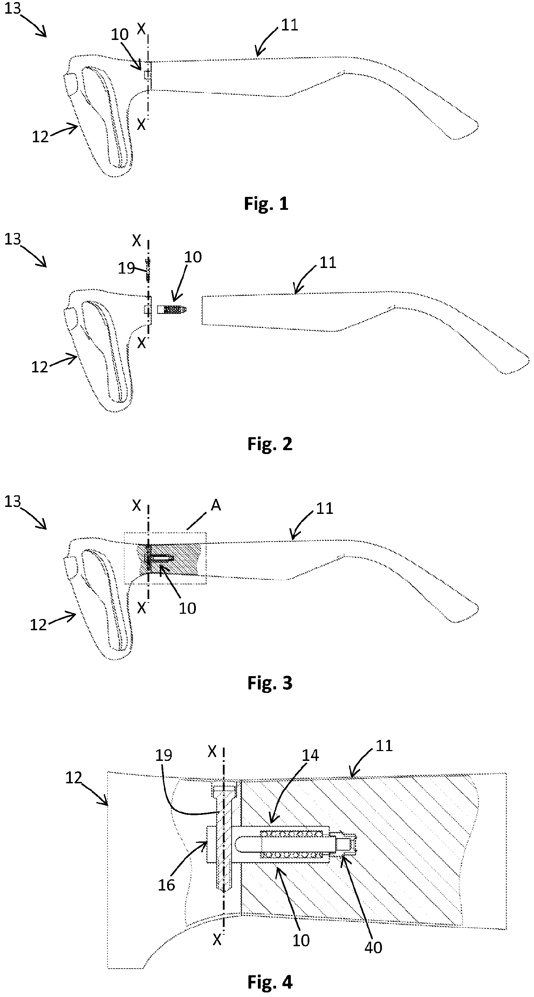

The spring hinge 10 is intended to hinge together a side arm 11 and a front piece 12 of a spectacles frame 13 about a pivoting axis X (see Figures 1-4 and 31).

In the description below, with reference to the attached figures, "front" will define the part of the hinge, or of its single elements, which during use is relatively closer to pivoting axis X. "Rear" will indicate the part of the hinge, or its single elements, which during use is relatively further from the pivoting axis X.

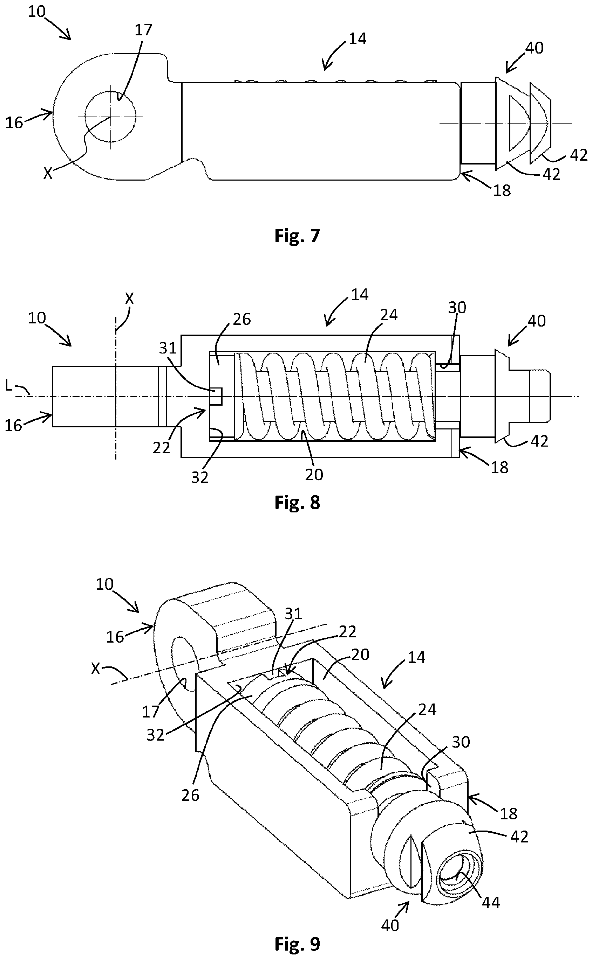

With reference to Figures 7-9, 15-17, 20-22 and 28-29, the spring hinge 10 comprises a swivel piece 14 having a front pivoting end 16, advantageously provided with a hole or eyelet 17 for pivotably mounting the hinge 10, for example by means of the screw 19 (see Figures 2, 3, 4 and 31).

The swivel piece 14 also has a rear wall 18 opposite to the front pivoting end 16.

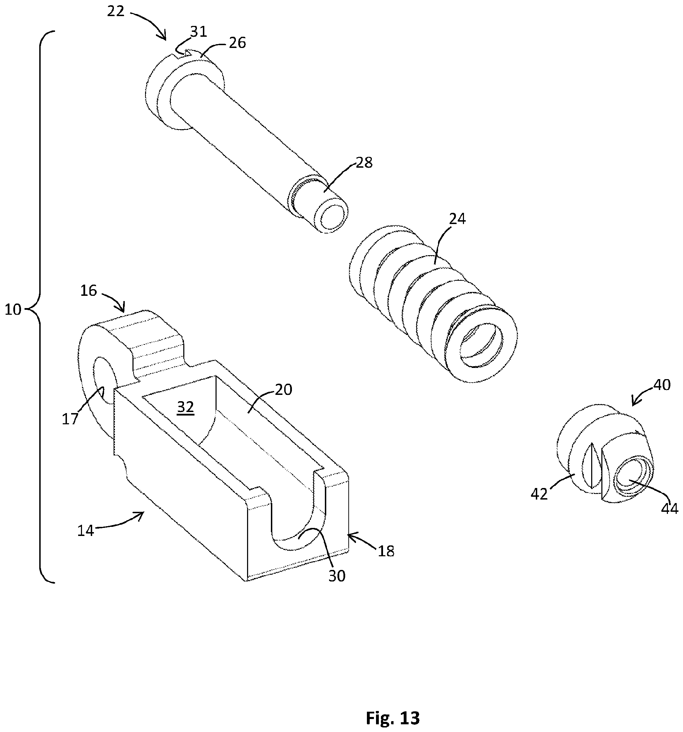

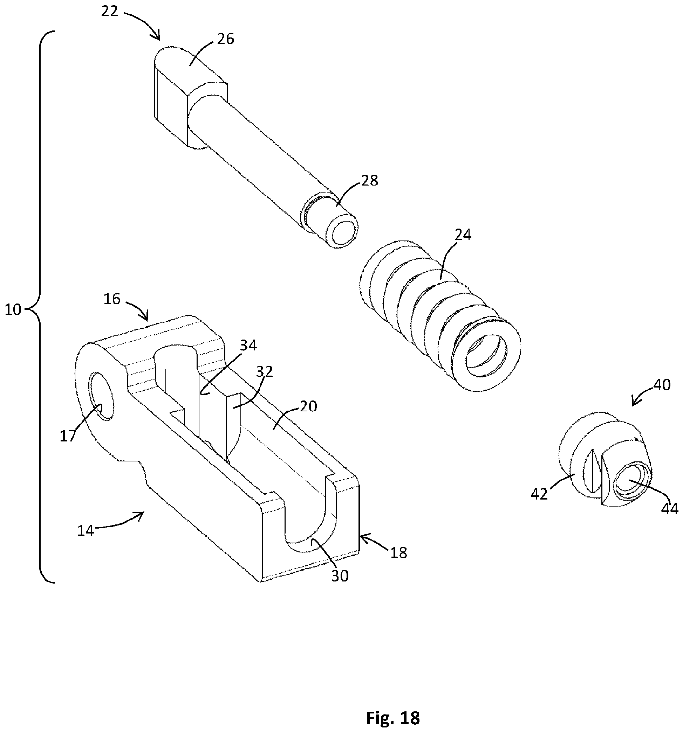

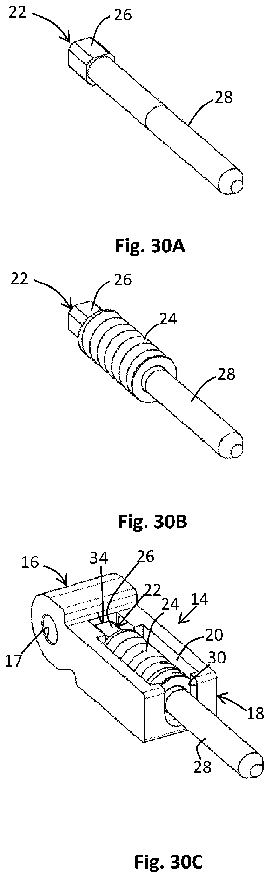

As is clearly visible in Figures 13, 18, 23 and 30C, the swivel piece 14 has an open cavity 20, preferably positioned along a side wall of the swivel piece 14.

The cavity 20 receives, seated inside it, an anchoring element 22 which has, fitted thereon, elastic means 24, preferably a helical spring, acting between a front end portion 26 of the anchoring element 22 and the rear wall 18 of the swivel piece 14 (see for example Figures 8 and 9).

In particular, the elastic means 24 may advantageously act with their first thrusting end on the front end portion 26 of the element 22, which forms a bearing projection, and react with an opposite second end against the rear wall 18, which acts as an abutment.

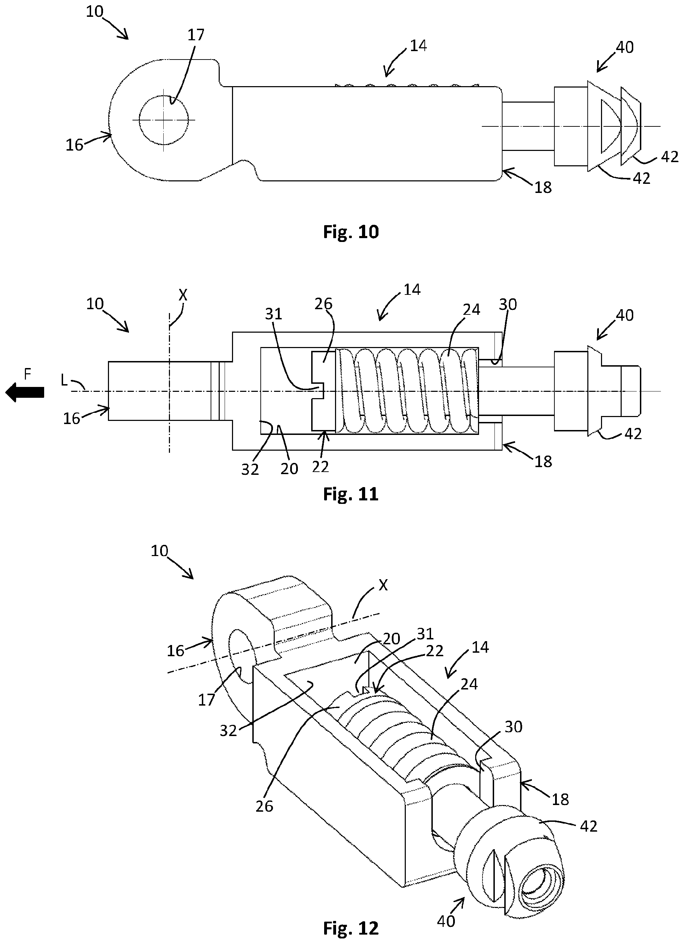

Figures 10, 11 and 12 show, by way of example, a configuration of the hinge 10 in which, following a pulling force acting on the hinging portion 16 of the swivel piece 14, the spring 24 is compressed between the front end portion 26 of the anchoring element 22 and the rear wall 18 of the swivel piece 14. The pulling force in Figure 11 is schematically indicated by the arrow F.

In accordance with the invention the anchoring element 22 is seated inside the cavity 20 so that a rear portion thereof 28 projects from the swivel piece 14 through a recess 30 formed in the rear wall 18 of the said swivel piece 14.

For the purposes of the present invention "recess" is understood as meaning an open concavity; said open concavity is provided in the rear wall 18 of the swivel piece 14.

Unlike a hole, the recess does not define a closed surface.

The recess 30 is therefore open on one of its sides. Preferably, the cavity 20 and the recess 30 are open in a same side wall of the swivel piece 14.

The recess 30 preferably has a U or V shaped cross-section, but different shapes are possible in order to satisfy different requirements.

Owing to the provision of the recess 30, it is possible to insert the anchoring element 22, already provided with the spring 24, inside the swivel piece 14 by moving it laterally close to the side of the cavity 20, without having to incline it.

In other words, as will become clear below, during assembly of the hinge 10, the anchoring element 22 with the spring 24 may be rested on the bottom of the cavity 20 and the recess 30, remaining in a position substantially parallel to the longitudinal axis L of the swivel piece 14, thus simplifying significantly the operations for assembly of the hinge 10.

Moreover, the groove of the recess 30 may act as a support for the rear portion 28 of the anchoring element 22 and act as a guide for the movements of the swivel piece 14 during opening and closing of the side arm.

As is clearly visible, for example in Figures 8 and 9, it is possible in fact to provide a minimum amount of play between the inner surfaces of the recess 30 and the rear portion 28 of the anchoring element 22 since the recess 30 is not required to have dimensions larger than those of the rear portion 28 in order to allow the anchoring element 22 to be seated inside the cavity 20.

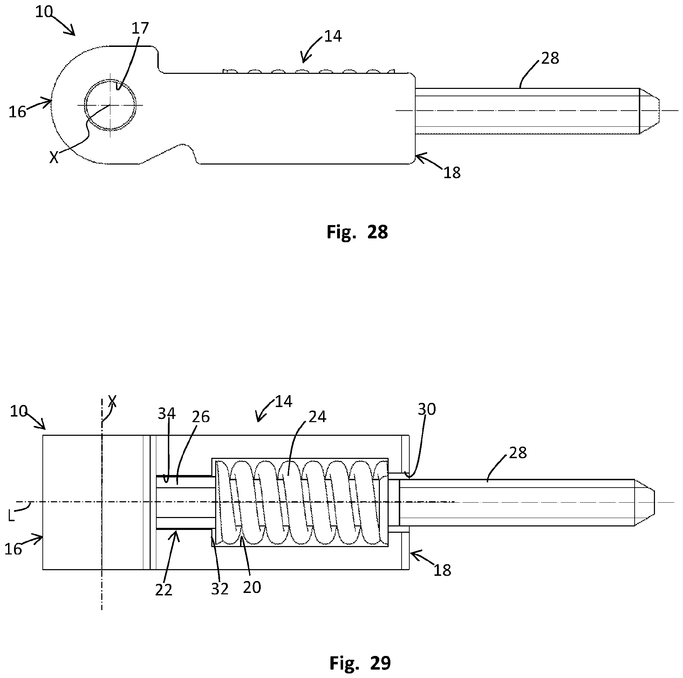

In a first embodiment of the hinge 10, as shown in Figures 28 and 29, the rear portion 28 of the anchoring element 22 may be lengthened so that it may be provided with a threading or knurling and thus be directly fixed, hot or cold, to the side arm 11 or the front piece 12.

Alternatively, as shown in the attached figures, a stop element 40, provided with gripping means 42, may be fixed to the rear portion 28 of the anchoring element 22 projecting from the swivel piece 14. Advantageously, the stop element 40 has transverse dimensions greater than those of the recess 30 and smaller than those of the swivel piece 14 and is intended, when the swivel piece 14 is located in its rest position, to bear against the outer surface of the rear wall 18 (see for example Figures 7-9).

The stop element 40 provides a greater gripping surface and therefore allows a more secure fixing of the element 22 to the side arm 11 or to the front piece 12.

The stop element 40 may have a tapered shape, while the gripping means 42 preferably consist of ratchet gripping means shaped so as to facilitate insertion of the stop element 40 in the side arm 11.

The gripping means 42 are preferably arranged on a side surface of the stop element 40.

The stop element 40 may be provided with a threaded hole 44 inside which the rear portion 28 of the anchoring element 22 may be fixed, for example screwed.

In a different embodiment, the stop element 40 may be provided with a through-hole in which the rear portion 28 of the anchoring element 22 is intended to be inserted and then riveted there, so as to allow fixing together of the element 22 and stop element 40.

Once the anchoring element 22 with the spring 22 is seated inside the cavity 20, the front end portion 26 of the anchoring element 22 by means of the action of the spring is intended to bear against a front wall 32 of the cavity 20 (see Figures 8, 9, 16, 17, 21, 22 and 29). This allows the hinge 10 to be supplied in a preassembled condition to the spectacles manufacturer, thus simplifying the operations for fixing the hinge to the side arm or the front piece of the frame.

As is known, the front end portion 26 remains in abutment against the front wall 32 when the hinge is in the rest condition, i.e. with the spring 24 not compressed. Once fixed to the side arm, the opening and closing movements of the side arm cause the relative sliding of the swivel piece 14 and the anchoring element 22, with the consequence that in some operating conditions the front end portion 24 is spaced from the front wall 32 (see for example Figures 10-12, 16A and 21A).

With reference to the embodiment shown in Figures 7-13, the front end portion 26 of the anchoring element 22 may be flat so as to bear against a flat front wall 32 of the cavity 20.

This front wall 32 is situated opposite the rear wall 18.

In this embodiment, the anchoring element 22 is preferably a screw and the front end portion 26 consists of the head of the screw. Advantageously the head of the screw may be provided with a transverse slit 31. Once the screw 22 has been arranged inside the swivel piece 14, by acting transversely on the slit 31 of the screw head, on the open side of the cavity 20, it is possible to screw or unscrew with a suitable tool the screw 22 with respect to the stop element 40, thus varying the compression of the spring 24 and consequently adjusting the travel of the swivel piece 14.

As is clearly visible in Figures 8 and 9 and 11 to 12, in this embodiment, the provision of a flat front end portion 26 and a flat front wall 32, together with the absence of a transverse through-hole, allows the transverse thickness of the hinging portion 16 to be reduced. In this way, advantageously, the hinge 10 may be mounted on side arms and front pieces having smaller transverse thicknesses.

The anchoring element 22 is retained firmly inside the cavity 20 owing to the action exerted by the elastic means 24. There is no risk, therefore, that during the handling of the hinge 10, the anchoring element 22 may come out of the swivel piece. However, along the side walls of the swivel piece 14, once the anchoring element 22 has been inserted with the elastic means 24 inside the cavity, fastening means may be provided, for example a band which surrounds the side walls of the swivel piece 14, so as to be able to provide a further system for preventing the anchoring element 22 from coming out of the cavity 20.

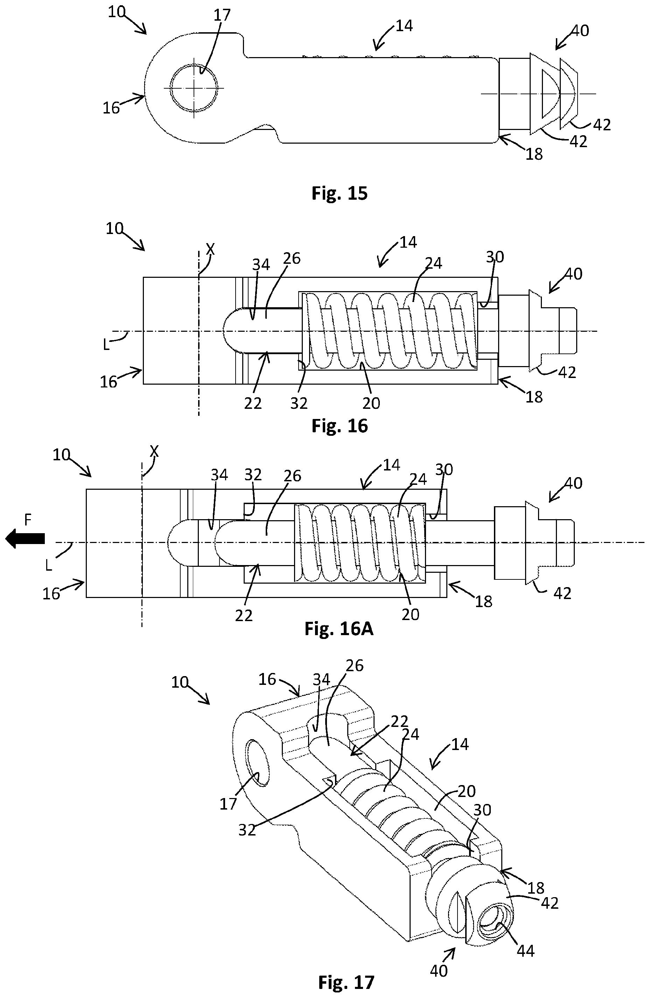

According to the invention, the embodiment shown in Figures 15-18 and the embodiment shown in Figures 28 and 29, the front end portion 26 of the anchoring element 22 has a prismatic form, so as to be able to be slidably inserted inside a seat 34 formed in the front wall 32 of the cavity 20.

Advantageously in the embodiment shown in Figures 15 to 18, the seat 34 and the front end portion 26 of the anchoring element 22 create a form-fitting connection having respective cross-sections with a matching shape.

Advantageously, in the embodiment shown in Figures 28 and 29, the front end portion 26 has a square cross-section with chamfered edges. In this way, there is not a single direction for insertion of the front end portion 26 inside the seat 34.

Advantageously, when the hinge 10 is in use, following sliding of the swivel piece 14 inside the cavity formed in the side piece, the front end portion 26 of the anchoring element 22 may slide inside the seat 34 (see Figure 16A).

Advantageously, the seat 34, in combination with the recess 30, ensures more precise movements of the swivel piece 14 with respect to the anchoring element 22, ensuring that the anchoring element 22 is unable to flex or bend during the hinge opening and closing movements.

Moreover, the seat 34, since it may be formed in a solid portion of the swivel piece 14, does not adversely affect the mechanical strength of the hinging portion 16 and does not result in an increase in the transverse dimensions of the swivel piece.

Furthermore, as will be clarified below, the provision of the seat 34 also allows the operations for assembly of the hinge 10 to be simplified.

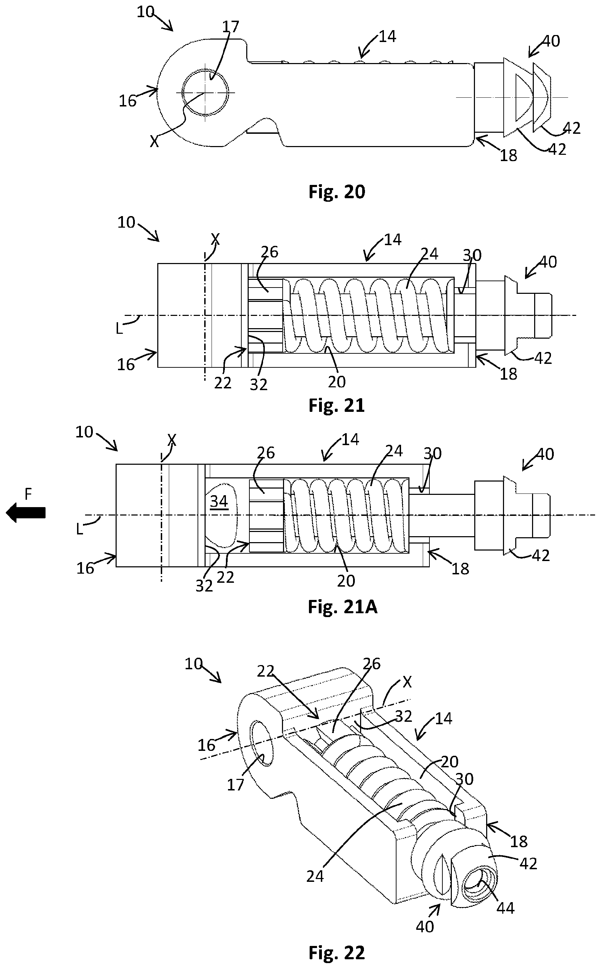

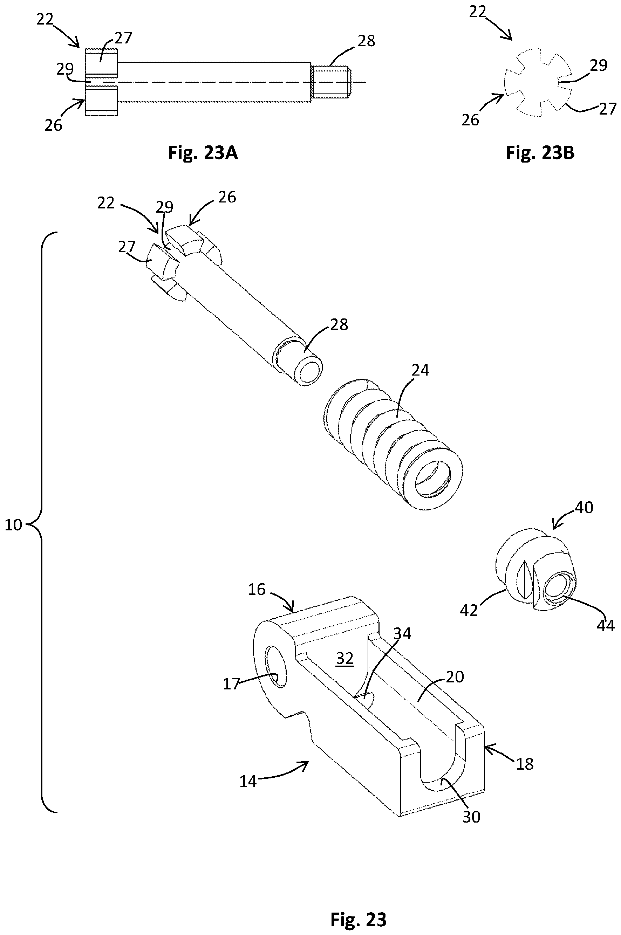

With reference to the embodiment shown in Figures 20-23, the front end portion 26 of the anchoring element 22 may be provided with a plurality of radial projections 27 designed to define a plurality of longitudinal grooves 29 (see Figures 23, 23A and 23B).

In this embodiment, as can be clearly seen in Figures 21A and 23, the cavity 20 of the swivel piece 14 is provided with a transverse opening 34 in the vicinity of the front wall 32.

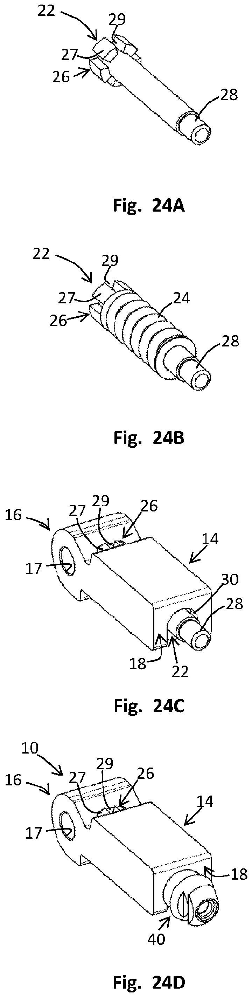

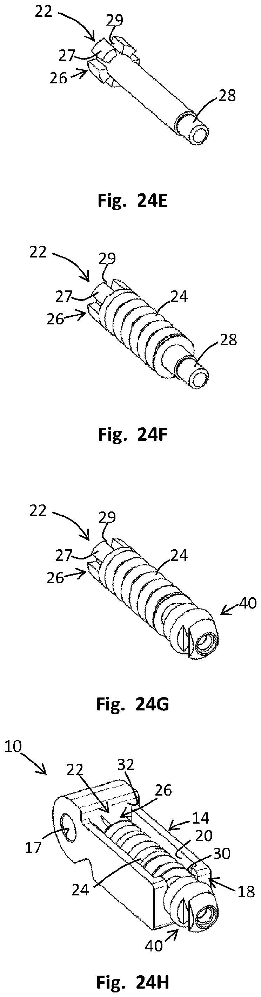

Once the hinge 10 is assembled, according to the procedures which will be described below, the radial projections 27 of the front end portion 26 are accessible via the transverse opening 34 (see for example Figures 24C and 24D).

In this way, once the hinge 10 has been assembled, with a suitably shaped tool able to engage inside the longitudinal grooves 29 defined by the projections 27 it is possible to operate the anchoring element 22, screwing it into the stop element 40 so as to compress the spring 24 and vary the travel of the swivel piece 14, depending on the different requirements. Moreover, the radial projections 27 are accessible also once the hinge 10 has been fixed in the side arm 11 or in the front piece 12 of the frame 13, allowing if necessary also the removal of the hinge from the side arm or front piece.

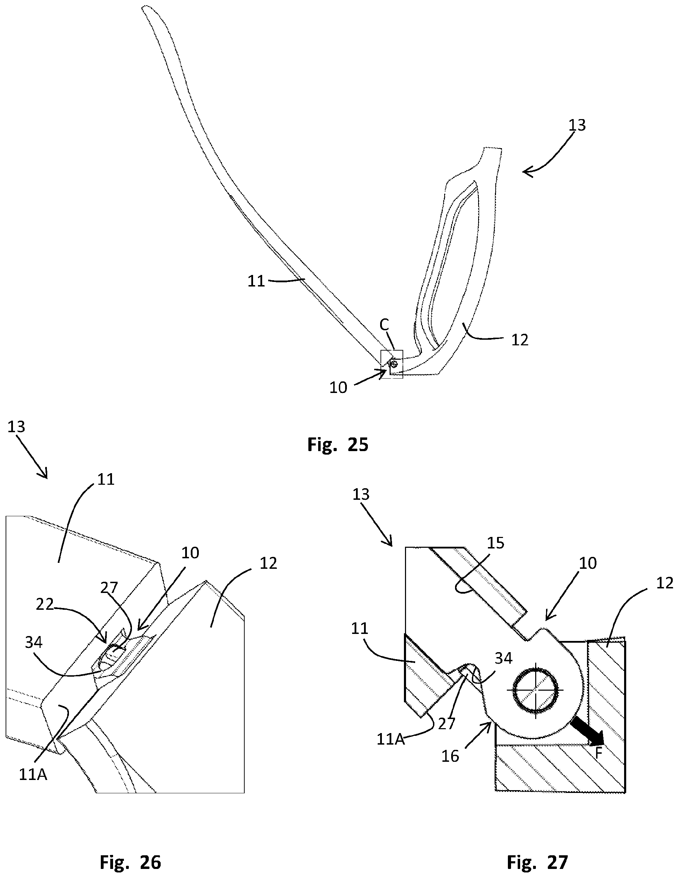

As can be clearly seen in Figures 25-27, in order to access the projections 27 of the anchoring element 22, it is sufficient to incline the side arm 11 with respect to the front piece 12 by about 40°-50°, bringing it into a semi-open position.

In this position, the hinging portion 16 of the swivel piece 14 owing to the pulling force F acting on it is located spaced from the terminal end 11A of the side arm 11 so as to make the opening 34 and consequently the projections 27 accessible.

The operator by means of a suitable tool able to engage inside the grooves 29 may therefore adjust the anchoring screw 22 and if necessary unscrew it from the stop element 40, allowing the removal of the swivel piece 14 from the side arm 11. The stop element 40, in turn, remains fixed to the side arm.

The swivel piece may therefore be replaced by one which is the same and which will be locked inside the seat by screwing using the methods described above the terminal end portion of the anchoring screw 22 inside the stop element 40 which is fixed to the side arm.

As already mentioned, with reference now to Figures 1-6 and 31, the present application also relates to a frame 13 comprising the hinge 10.

In particular, the frame 13 comprises a front piece 12 and two side arms 11, each side arm 11 being hinged together with the front piece 12 by means of the hinge 10 about a pivoting axis X.

Preferably, the front piece 12 and the side arms 11 of the frame 13 are formed by means of injection-moulding of polymer material. Advantageously, the front piece 12 and the side arms 11 may be made of nylon. Advantageously, the front piece 12 and the side arms 11 may be made of cellulose acetate.

The swivel piece 14 is intended to be inserted inside a cavity 15 which may be formed at one end of the side arm or the front piece.

The swivel piece 14 of the hinge 10 and the cavity 15 have respective cross-sections which are designed to create a mutual form-fitting connection. This form-fitting connection prevents the swivel piece 14 from rotating, about its longitudinal axis L, with respect to the side arm 11 or the front piece 12.

Figures 1-6 and 31 show an embodiment in which the cavity 15 is provided in the side arm 11. The embodiment in which the cavity 15 is provided in the front piece 12 is similar and may be easily imagined by the person skilled in the art.

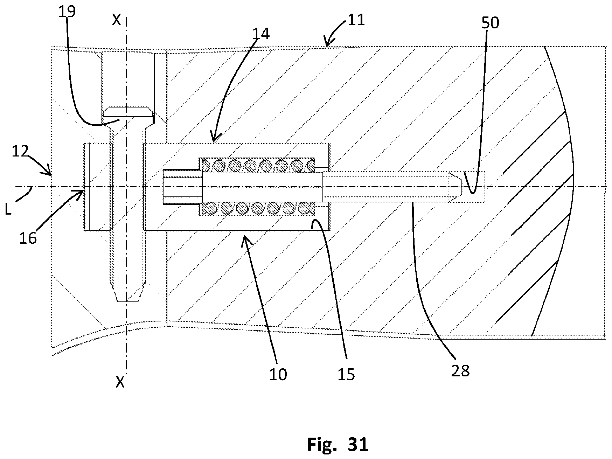

The swivel piece 14 is locked slidably inside the cavity 15 by means of the anchoring element 22, the projecting rear portion 28 of which is intended to be fixed directly (see Figure 31), or by means of the stop element 40 (see Figure 4), in the material forming the side arm or the front piece.

Said fixing is performed hot, after heating slightly the side arm or the front piece, so as to reduce the resistance of the polymer material of the frame to insertion of the stop element 40 or the rear portion of the anchoring element.

Alternatively, in the case of the embodiment shown in Figure 31, fixing of the rear portion 28 of the anchoring element 22 may be performed in cold conditions.

Advantageously, the stop element 40 may be inserted inside a seat 50 which is provided in the side arm or in the front piece and is adjacent to and communicates with the cavity 15.

The seat 50 preferably has dimensions compatible with those of the stop element 40 so as to ensure that the gripping means 42 grip the inner surfaces of the seat 50.

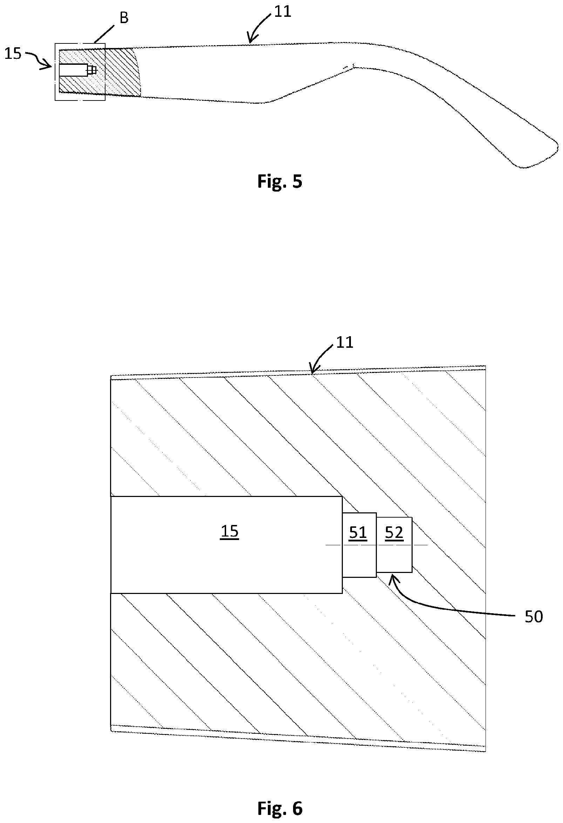

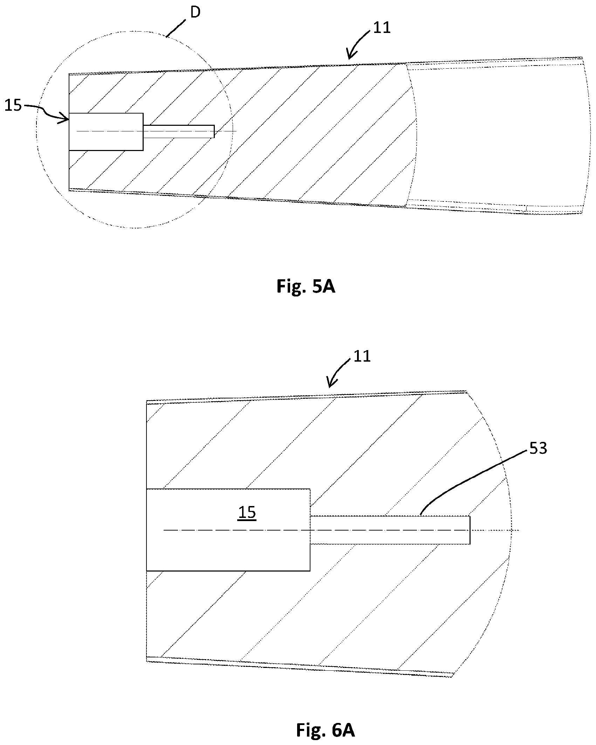

Figures 5 and 6 show a seat 50 which is advantageously formed by two adjacent portions 51 and 52 having different transverse dimensions so as to engage better with the stop element 40.

In Figure 31, the seat 50 has dimensions compatible with those of the rear portion 28. In particular the dimensions of the seat 50 are defined so as to provide a form-fit with interference between the rear portion 28 and the seat 50.

The insertion of the hinge 10 inside the cavity 15 is performed by exerting a longitudinal compressive force, i.e. a force directed along the longitudinal axis L, on the hinging portion 16 of the swivel piece 14.

This insertion is facilitated by the fact that, once the anchoring element 22, together with the spring 24, has been inserted inside the cavity 20, the front end portion 26 of the anchoring element 22 is intended to bear against the flat front wall 32 of the cavity 20 or be inserted inside the seat 34.

A compression exerted on the hinging portion of the swivel piece 14 therefore results in a thrust against the front end portion of the anchoring element 22, allowing pushing and blocking of the rear portion 28 of the anchoring element 22 in the polymer material of the side arm or the front piece.

The present application relates, moreover, to a method for assembly of the hinge 10.

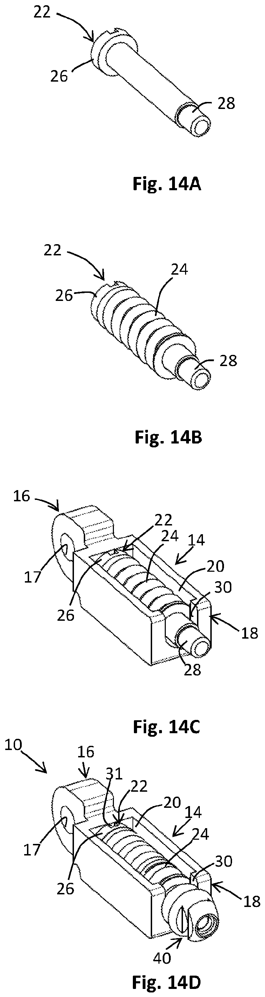

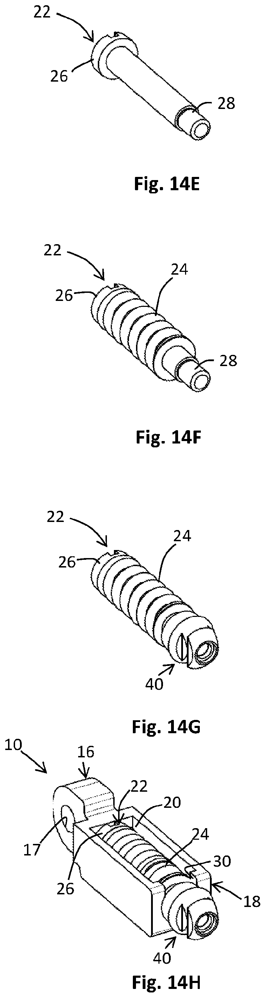

With reference firstly to Figures 14A-14C, 19A-19C, 24A-24C and 30A-30C, relating respectively to the hinges shown in Figures 7, 15, 20 and 28, the assembly method comprises the steps of:
a) providing an anchoring element 22, having a front end portion 26 and a rear portion 28, and a swivel piece 14, having a front pivoting end 16 and a rear wall 18; the swivel piece 14 being provided with an open cavity 20 (see Figures 14A, 19A, 24A and 30A);
b) fitting elastic means 24 onto the anchoring element 22 (see Figures 14B, 19B, 24B and 30B);
c) inserting the anchoring element 22 provided with the elastic means 24 inside the cavity 20 so that the rear portion 28 of the anchoring element 22 projects from the swivel piece 14 through a recess 30 formed in the rear wall 18 of the swivel piece 14; the elastic means 24 acting between the front end portion 26 of the anchoring element 22 and the rear wall 18 of the swivel piece 14 (see Figures 14C, 19C, 24C and 30C; in Figure 24C, the swivel piece 14 is shown in an overturned configuration so that the front end portion 26 is visible through the opening 34; the assembly may however be performed in an identical manner to that described with reference to the other two embodiments.)

Advantageously, the provision of the recess 30 facilitates the insertion of the anchoring element 22 and the elastic means 24 inside the cavity 20.

In order to insert the anchoring element 22 into the cavity 20 it is sufficient, in fact, to compress slightly the elastic means 24 fitted onto the anchoring element 22 against the front end portion 26 of the anchoring element 22, by passing the rear portion 28 of the anchoring element 22 through the recess 30.

Once the anchoring element 22 has been inserted in the cavity 20 and in the recess 30, with the rear portion 28 projecting from the swivel piece 14, releasing of the spring 24 causes the front end portion 26 of the anchoring element 22 to bear against the front wall 32 of the cavity, locking in position the anchoring element 22 and the spring 24.

Advantageously, in order to facilitate the fixing of the hinge 10 to the side arm 11 or to the front piece 12 of the frame 13, assembly of the hinge 10 may be completed by fixing a stop element 40 on the rear portion 28 of the anchoring element 22 (see Figures 14D, 19D and 24D).

With reference to the method illustrated in Figures 14D and 24D, in order to prevent the front end portion 26 of the screw 22 from rotating during fixing of the stop element 40, therefore preventing fixing of the rear portion 28 inside the stop element 40, advantageously it is possible to use a tool suitably shaped so as to engage transversely with the slit 31 (see Figure 14D) or the grooves 29 (see Figure 24D) provided on the front end portion 26. By means of the tool it is possible to prevent rotation of the screw during the operation involving screwing of the stop element 40.

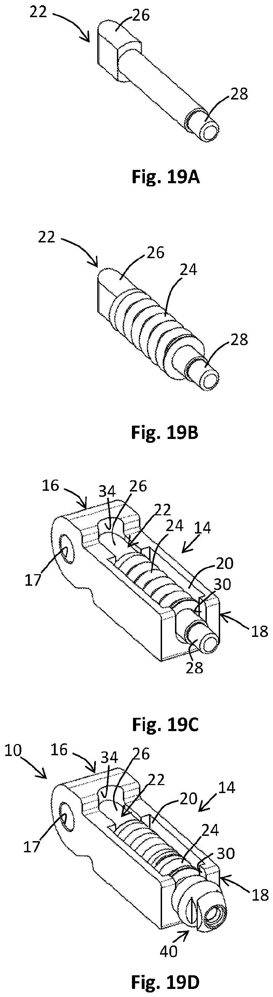

In the embodiment shown in Figure 19D, advantageously it is not necessary to use this tool, because of the form-fit which is provided between the front end portion 26 of the anchoring screw 22 and the seat 34. This form-fit prevents the head of the anchoring screw 22 from rotating during fixing of the stop element 40.

The stop element 40 is intended to bear against the outer rear wall 18, thus ensuring secure fixing of the element 22 inside the cavity 20. The rear portion 28 of the anchoring element 22 is in fact prevented from coming out of the recess 30.

In an alternative embodiment (see Figures 14E-14H and 24E-24H), fixing of the stop element 40 on the rear portion 28 of the anchoring element 22 is performed before inserting the anchoring element 22 inside the cavity 20 (see Figures 14G and 24G).

Fixing of the stop element 40 is performed after the elastic means 24 have been fitted onto the anchoring element 22. In this way it is easy to lock the front end portion of the anchoring element 22 so as to allow fixing of the stop element 40, without there being the risk of the front end portion 26 of the anchoring element 22 being able to rotate.

It is also possible to act longitudinally on the front end portion of the screw, this being accessible.

Once the stop element has been fixed, the anchoring element 22 may be inserted inside the cavity 20 compressing slightly the elastic means 24. These means will then be released so as to be able to bear on one side against the rear wall 18 of the swivel piece 14 and on the other side against the front end portion 26 of the screw 22, ensuring that the latter is securely inserted inside the cavity 20.

The assembly method illustrated in Figures 14E-14H and 24E-24H may be used also with the hinge shown in Figures 15-17.

At this point it is clear how the predefined objects have been achieved.

The hinge 10, in fact, since it does not have a transverse through-hole in the pivoting portion 16 of the swivel piece 14, has smaller dimensions which allow it to be mounted also on side arms or front pieces having smaller cross-sections, while ensuring in any case the necessary mechanical strength.

The provision of the recess 30 allows easy assembly of the various parts of the hinge 10 and allows the latter to be supplied to the manufacturer of the spectacles in a preassembled condition.

Once the anchoring element 22 has been inserted in the cavity 20 so that the rear portion 28 projects form the swivel piece, the action exerted by the elastic means between the front end portion 26 and the rear wall 18 ensures that the anchoring element remains in position.

The recess 30, provided in the rear wall 18, and the seat 34, formed in the front wall of the cavity 20, ensure that the swivel piece 14 is guided by the anchoring element 22 during its movements in a precise and reliable manner.

The transverse slit 31 or the radial projections 27 provided on the anchoring screw 22 allow adjustment of the travel of the swivel piece once the hinge has been assembled.

The radial projections 27 of the anchoring screw and the transverse opening 34, which is formed in the vicinity of the hinging portion of the swivel piece, allow, even in the absence of a transverse through-hole, the head of the anchoring screw to be operated, even when the hinge has been fixed to the side arm or the front piece. In this way, if necessary, it is possible to replace the hinge 10 alone, without having to replace the entire front piece or the entire side arm of the frame.

Moreover, the hinge assembly method described above may be easily automated, with obvious advantages in terms of costs and productivity.

It is clear that the elastic hinge for spectacles described hitherto may be subject to modifications and/or the addition of parts, without thereby departing from the scope of the present invention.

It is also clear that, although the present invention has been described with reference to a number of specific examples, a person skilled in the art may certainly produce other equivalent forms of spring hinges for spectacles, having the characteristic features described in the claims and therefore all falling within the scope of protection defined by it.

## Claims

1. Spring hinge (10) intended to hinge together a side arm (11) and a front piece (12) of a frame for spectacles (13), comprising a swivel piece (14) having a front pivoting end (16) and a rear wall (18); said swivel piece (14) is provided with an open cavity (20) which receives, seated inside it, an anchoring element (22) which has, fitted thereon, elastic means (24) acting between a front end portion (26) of the anchoring element (22) and said rear wall (18);
said spring hinge (10) being **characterized in that** the anchoring element (22) is seated inside said cavity (20) so that a rear portion (28) thereof projects from the swivel piece (14) through a recess (30) formed in the rear wall (18) of the swivel piece (14); the recess (30) being open on one of its side, wherein the front end portion (26) of the anchoring element (22) is intended to bear, through the action of the elastic means (24), against a front wall (32) of the cavity (20) when the hinge (10) is in a rest condition; the front end portion (26) of the anchoring element (22) having a prismatic shape and being intended to be inserted slidably inside a seat (34) formed in the front wall (32) of the cavity (20).

2. Hinge (10) according to claim 1, **characterized in that** the cavity (20) and the recess (30) are open on a same side wall of the swivel piece (14).

3. Hinge (10) according to claim 2, **characterized in that** the recess (30) has a cross-section in the form of a U or V.

4. Hinge (10) according to claim 1, **characterized in that** a stop element (40) provided with gripping means (42) is fixed on the rear portion (28) of the anchoring element (22) projecting from the swivel piece (14).

5. Hinge (10) according to claim 1, **characterized in that** the seat (34) and the front end portion (26) of the anchoring element (22) create a form-fitting connection, having respective cross-sections with a matching shape.

6. Hinge (10) according to claim 1, **characterized in that** the cavity (20) of the swivel piece (14) is provided with a transverse opening (34) in the vicinity of the front wall (32) and **in that** the front end portion (26) of the anchoring element (22) is provided with a plurality of radial projections (27) accessible through the transverse opening.

7. Frame for spectacles (13) comprising a front piece (12) and two side arms (11), each side arm (11) being hinged with the front piece (12) by means of a spring hinge (10) about a pivoting axis (X) according to any one of claims 1 to 6, the side arm (11) or the front piece (12) being provided, at their front end, with a cavity (15) for seating the swivel piece (14), said cavity (15) having a cross-section designed to create a form- fitting connection with the swivel piece (14).

8. Frame for spectacles (13) according to claim 7, **characterized in that** the side arm (11) or the front piece (12) are provided with a seat (50) adjacent to and communicating with the cavity (15); said seat (50) being designed to receive the stop element (40) of the hinge (10).

9. Method for assembling a spring hinge (10) intended to hinge together a side arm (11) and a front piece (12) of a frame for spectacles (13), comprising the steps of:
a) providing an anchoring element (22) having a front end portion (26) and a rear portion (28), and a swivel piece (14), having a front pivoting end (16) and a rear wall (18); the swivel piece (14) being provided with an open cavity (20);
b) fitting elastic means (24) onto the anchoring element (22);
c) inserting the anchoring element (22) provided with the elastic means (24) inside the cavity (20) so that the rear portion (28) of the anchoring element (22) projects from the swivel piece (14) through a recess (30) formed in the rear wall (18) of the swivel piece (14); the recess (30) being open on one of its sides and the elastic means (24) acting between the front end portion (26) of the anchoring element (22) and the rear wall (18) of the swivel piece (14), wherein the step of inserting the anchoring element (22) inside the cavity (20) is performed by compressing the elastic means (24) against the front end portion (26) of the anchoring element (22); these elastic means (24) being released once the anchoring element (22) has been inserted inside the cavity (20) and inside the recess (30) such that the front end portion (26) of the anchoring element (22) is made to bear against the front wall (32) of the cavity (20); the front end portion (26) of the anchoring element (22) having a prismatic shape and being intended to be inserted slidably inside a seat (34) formed in the front wall (32) of the cavity (20).

10. Method according to claim 9, **characterized in that** it comprises the step of fixing a stop element (40) on the rear portion (28) of the anchoring element (22).

11. Method according to claim 10, **characterized in that** fixing of the stop element (40) occurs after the anchoring element (22) has been inserted inside the cavity (20) or after the elastic means (24) have been fitted onto the anchoring element (22).

## Patentansprüche

1. Federscharnier (10), das dazu bestimmt ist, einen Bügel (11) und ein Vorderteil (12) eines Brillengestells (13) gelenkig miteinander zu verbinden, das ein Drehteil (14) mit einem vorderen drehbaren Ende (16) und einer Rückwand (18) umfasst; wobei das genannte Drehteil (14) mit einem offenen Hohlraum (20) ausgestattet ist, der, darin eingesetzt, ein Verankerungselement (22) aufnimmt, das, daran angebracht, elastische Mittel (24) aufweist, die zwischen einem vorderen Endabschnitt (26) des Verankerungselements (22) und der Rückwand (18) wirken;
wobei das genannte Federscharnier (10) **dadurch gekennzeichnet ist, dass** das Verankerungselement (22) im Inneren des genannten Hohlraums (20) platziert ist, so dass ein hinterer Abschnitt (28) desselben von dem Drehteil (14) durch eine in der Rückwand (18) des Drehteils (14) ausgebildete Aussparung (30) herausragt; wobei die Aussparung (30) an einer ihrer Seiten offen ist, wobei der vordere Endabschnitt (26) des Verankerungselements (22) dazu bestimmt ist, durch die Wirkung der elastischen Mittel (24) gegen eine Vorderwand (32) des Hohlraums (20) anzuschlagen, wenn sich das Scharnier (10) in einem Ruhezustand befindet; wobei der vordere Endabschnitt (26) des Verankerungselements (22) eine prismatische Form aufweist und dazu bestimmt ist, verschiebbar in einen in der Vorderwand (32) des Hohlraums (20) ausgebildeten Sitz (34) eingeführt zu werden.

2. Scharnier (10) nach Anspruch 1, **dadurch gekennzeichnet, dass** der Hohlraum (20) und die Aussparung (30) an einer selben Seitenwand des Drehteils (14) offen sind.

3. Scharnier (10) nach Anspruch 2, **dadurch gekennzeichnet, dass** die Aussparung (30) einen U- oder V-förmigen Querschnitt aufweist.

4. Scharnier (10) nach Anspruch 1, **dadurch gekennzeichnet, dass** ein mit Greifmitteln (42) ausgestattetes Anschlagelement (40) an dem hinteren Abschnitt (28) des aus dem Drehteil (14) herausragenden Verankerungselements (22) befestigt ist.

5. Scharnier (10) nach Anspruch 1, **dadurch gekennzeichnet, dass** der Sitz (34) und der vordere Endabschnitt (26) des Verankerungselements (22) eine formschlüssige Verbindung bilden, die jeweils Querschnitte mit übereinstimmender Form aufweist.

6. Scharnier (10) nach Anspruch 1, **dadurch gekennzeichnet, dass** der Hohlraum (20) des Drehteils (14) in der Nähe der Vorderwand (32) mit einer querliegenden Öffnung (34) ausgestattet ist und dass der vordere Endabschnitt (26) des Verankerungselements (22) mit einer Vielzahl von radialen Vorsprüngen (27) ausgestattet ist, die über die querliegende Öffnung zugänglich sind.

7. Brillengestell (13), umfassend ein Vorderteil (12) und zwei Bügel (11), wobei jeder Bügel (11) mit dem Vorderteil (12) mittels eines Federscharniers (10) um eine Schwenkachse (X) nach einem der Ansprüche 1 bis 6 gelenkig verbunden ist,
wobei der Bügel (11) oder das Vorderteil (12) an ihrem vorderen Ende mit einem Hohlraum (15) zur Positionierung des Drehteils (14) ausgestattet sind, wobei der genannte Hohlraum (15) einen Querschnitt aufweist, der darauf ausgelegt ist, eine formschlüssige Verbindung mit dem Drehteil (14) zu bilden.

8. Brillengestell (13) nach Anspruch 7,
**dadurch gekennzeichnet, dass** der Bügel (11) oder das Vorderteil (12) mit einem Sitz (50) ausgestattet sind, der an den Hohlraum (15) angrenzt und mit diesem in Verbindung steht; wobei der genannte Sitz (50) darauf ausgelegt ist, das Anschlagelement (40) des Scharniers (10) aufzunehmen.

9. Verfahren zum Zusammenbau eines Federscharniers (10), das dazu bestimmt ist, einen Bügel (11) und ein Vorderteil (12) eines Brillengestells (13) gelenkig miteinander zu verbinden und die folgenden Schritte umfasst:
a) Bereitstellen eines Verankerungselements (22), das einen vorderen Endabschnitt (26) und einen hinteren Abschnitt (28) aufweist, und eines Drehteils (14), das ein vorderes drehbares Ende (16) und eine Rückwand (18) aufweist; wobei das Drehteil (14) mit einem offenen Hohlraum (20) ausgestattet ist;
b) Anbringen von elastischen Mitteln (24) an dem Verankerungselement (22);
c) Einführen des mit den elastischen Mitteln (24) ausgestatteten Verankerungselements (22) in den Hohlraum (20), so dass der hintere Abschnitt (28) des Verankerungselements (22) durch eine in der Rückwand (18) des Drehteils (14) ausgebildete Aussparung (30) aus dem Drehteil (14) herausragt; wobei die Aussparung (30) an einer ihrer Seiten offen ist und die elastischen Mittel (24) zwischen dem vorderen Endabschnitt (26) des Verankerungselements (22) und der Rückwand (18) des Drehteils (14) wirken, wobei der Schritt des Einführens des Verankerungselements (22) in den Hohlraum (20) durch Komprimieren der elastischen Mittel (24) gegen den vorderen Endabschnitt (26) des Verankerungselements (22) erfolgt; wobei diese elastischen Mittel (24) gelöst werden, sobald das Verankerungselement (22) in das Innere des Hohlraums (20) und in die Aussparung (30) eingeführt wurde, so dass der vordere Endabschnitt (26) des Verankerungselements (22) an der Vorderwand (32) des Hohlraums (20) in Anschlag gebracht wird; wobei der vordere Endabschnitt (26) des Verankerungselements (22) eine prismatische Form aufweist und dazu bestimmt ist, verschiebbar in einen in der Vorderwand (32) des Hohlraums (20) ausgebildeten Sitz (34) eingeführt zu werden.

10. Verfahren nach Anspruch 9, **dadurch gekennzeichnet, dass** es den Schritt der Befestigung eines Anschlagelements (40) an dem hinteren Abschnitt (28) des Verankerungselements (22) umfasst.

11. Verfahren nach Anspruch 10,
**dadurch gekennzeichnet, dass** die Befestigung des Anschlagelements (40) erfolgt, nachdem das Verankerungselement (22) in den Hohlraum (20) eingeführt wurde oder nachdem die elastischen Mittel (24) an dem Verankerungselement (22) angebracht wurden.

## Revendications

1. Charnière à ressort (10) destinée à être articulée avec une branche latérale (11) et une pièce avant (12) d'une monture pour lunettes (13), comprenant une pièce pivot (14) ayant une extrémité pivotante avant (16) et une paroi arrière (18) ; ladite pièce pivot (14) est pourvue d'une cavité ouverte (20) qui reçoit, logée à l'intérieur de celle-ci, un élément d'ancrage (22) qui comporte des moyens élastiques (24) montés sur celui-ci, agissant entre une partie d'extrémité avant (26) de l'élément d'ancrage (22) et ladite paroi arrière (18) ;
ladite charnière à ressort (10) est **caractérisée en ce que** l'élément d'ancrage (22) est logé à l'intérieur de ladite cavité (20) de sorte qu'une partie arrière (28) de celui-ci fasse saillie de la pièce pivot (14) à travers un évidement (30) formé dans la paroi arrière (18) de la pièce pivot (14) ; l'évidement (30) étant ouvert sur l'un de ses côtés, la partie d'extrémité avant (26) de l'élément d'ancrage (22) étant destinée à s'appuyer, sous l'action des moyens élastiques (24), contre une paroi avant (32) de la cavité (20) lorsque la charnière (10) est dans une condition de repos ; la partie d'extrémité avant (26) de l'élément d'ancrage (22) ayant une forme prismatique et étant destinée à être insérée de manière coulissante à l'intérieur d'un siège (34) formé dans la paroi avant (32) de la cavité (20).

2. Charnière (10) selon la revendication 1, **caractérisée en ce que** la cavité (20) et l'évidement (30) sont ouverts sur une même paroi latérale de la pièce pivot (14).

3. Charnière (10) selon la revendication 2, **caractérisée en ce que** l'évidement (30) a une section transversale en forme de U ou de V.

4. Charnière (10) selon la revendication 1, **caractérisée en ce qu'**un élément d'arrêt (40) pourvu de moyens de préhension (42) est fixé sur la partie arrière (28) de l'élément d'ancrage (22) faisant saillie de la pièce pivot (14).

5. Charnière (10) selon la revendication 1, **caractérisée en ce que** le siège (34) et la partie d'extrémité avant (26) de l'élément d'ancrage (22) créent une connexion par forme, ayant des sections transversales respectives de forme correspondante.

6. Charnière (10) selon la revendication 1, **caractérisée en ce que** la cavité (20) de la pièce pivot (14) est pourvue d'une ouverture transversale (34) à proximité de la paroi avant (32) et **en ce que** la partie d'extrémité avant (26) de l'élément d'ancrage (22) est pourvue d'une pluralité de saillies radiales (27) accessibles par l'ouverture transversale.

7. Monture pour lunettes (13) comprenant une pièce avant (12) et deux branches latérales (11), chaque branche latérale (11) étant articulée avec la pièce avant (12) au moyen d'une charnière à ressort (10) autour d'un axe de pivotement (X) selon l'une quelconque des revendications 1 à 6,
la branche latérale (11) ou la pièce avant (12) étant pourvue, à leur extrémité avant, d'une cavité (15) pour loger la pièce pivot (14), ladite cavité (15) ayant une section transversale conçue pour créer une connexion par forme avec la pièce pivot (14).

8. Monture pour lunettes (13) selon la revendication 7,
**caractérisée en ce que** la branche latérale (11) ou la pièce avant (12) sont pourvues d'un siège (50) adjacent à et communiquant avec la cavité (15) ; ledit siège (50) étant conçu pour recevoir l'élément d'arrêt (40) de la charnière (10).

9. Procédé d'assemblage d'une charnière à ressort (10) destinée être articulée avec une branche latérale (11) et une pièce avant (12) d'une monture pour lunettes (13), comprenant les étapes consistant à :
a) fournir un élément d'ancrage (22) ayant une partie d'extrémité avant (26) et une partie arrière (28), et une pièce pivot (14), ayant une extrémité pivotante avant (16) et une paroi arrière (18) ; la pièce pivot (14) étant pourvue d'une cavité ouverte (20) ;
b) monter des moyens élastiques (24) sur l'élément d'ancrage (22) ;
c) insérer l'élément d'ancrage (22) pourvu des moyens élastiques (24) à l'intérieur de la cavité (20) de manière à ce que la partie arrière (28) de l'élément d'ancrage (22) fasse saillie depuis la pièce pivot (14) à travers un évidement (30) formé dans la paroi arrière (18) de la pièce pivot (14) ; l'évidement (30) étant ouvert sur l'un de ses côtés et les moyens élastiques (24) agissant entre la partie d'extrémité avant (26) de l'élément d'ancrage (22) et la paroi arrière (18) de la pièce pivot (14), dans lequel l'étape d'insertion de l'élément d'ancrage (22) à l'intérieur de la cavité (20) est réalisée en comprimant les moyens élastiques (24) contre la partie d'extrémité avant (26) de l'élément d'ancrage (22) ; ces moyens élastiques (24) étant relâchés une fois que l'élément d'ancrage (22) a été inséré à l'intérieur de la cavité (20) et à l'intérieur de l'évidement (30) de sorte que la partie d'extrémité avant (26) de l'élément d'ancrage (22) soit amenée à s'appuyer contre la paroi avant (32) de la cavité (20) ; la partie d'extrémité avant (26) de l'élément d'ancrage (22) ayant une forme prismatique et étant destinée à être insérée de manière coulissante à l'intérieur d'un siège (34) formé dans la paroi avant (32) de la cavité (20).

10. Procédé selon la revendication 9, **caractérisé en ce qu'**il comprend l'étape de fixation d'un élément d'arrêt (40) sur la partie arrière (28) de l'élément d'ancrage (22).

11. Procédé selon la revendication 10,
**caractérisé en ce que** la fixation de l'élément d'arrêt (40) a lieu après que l'élément d'ancrage (22) a été inséré à l'intérieur de la cavité (20) ou après que les moyens élastiques (24) ont été montées sur l'élément d'ancrage (22).
